# EUROPÄISCHE PATENTSCHRIFT

(11) **EP 1 378 042 B1**
(45) Veröffentlichungstag und Bekanntmachung des Hinweises auf die Patenterteilung: **07.12.2005**
(21) Anmeldenummer: 02712609.3
(22) Anmeldetag: 04.04.2002
(51) Int. Cl.: H02G 9/06, G02B 6/44

(54) **KABELFÜHRUNG UND VERFAHREN ZUR HERSTELLUNG DERSELBEN**
CABLE GUIDE AND METHOD FOR PRODUCING THE SAME
GUIDE-CABLE ET PROCEDE PERMETTANT DE LE PRODUIRE

(30) Priorität: 09.04.2001 AT 5752001
(43) Veröffentlichungstag der Anmeldung: 07.01.2004
(73) Patentinhaber: Wien Kanal-Abwassertechnologien GesmbH, 1030 Wien (AT)
(72) Erfinder: KADRNOSKA, Helmut, A-1220 Wien (AT); REISS, Gerhard, A-2361 Laxenburg (AT); OGRIS, Bernhard, A-2511 Pfaffstätten (AT)
(74) Vertreter: Wildhack, Helmut
(86) Internationale Anmeldenummer: PCT/AT2002/000103
(87) Internationale Veröffentlichungsnummer: WO 2002/082610

(56) Entgegenhaltungen:
- EP-A- 1 085 360
- DE-A- 19 920 459
- DE-U- 29 916 731

## Beschreibung

Die Erfindung betrifft eine Kabelführung nach dem Oberbegriff des Anspruches 1, sowie ein Verfahren zur Herstellung einer solchen Kabelführung.

Es ist bekannt, Abwasserkanäle für das Verlegen von Kabelleitungen zu verwenden, da dies den Vorteil mit sich bringt, dass Grabungsarbeiten weitgehend vermieden werden können. Hierzu werden im Bereich des Kämpfers des in der Regel ein eiförmiges Profil aufweisenden Hauptwasserkanales Kabeltassen oder ähnliche Abstützeinrichtungen für die zu verlegenden Kabel befestigt. Als Kabel kommen in der Hauptsache Glasfaserkabel in Frage, welche nachträglich verlegt eine große Datenmenge transportieren können.

Aus der DE 19920459 A1 ist eine Vorrichtung bekannt geworden, mittels welcher ein Lichtwellenleiterkabel über einen senkrechten, den Zugang zu einem Kanalsystem freigebendem Schacht diesem Kanalsystem zugeführt wird. Um die Einhaltung des zulässigen Biegeradius für das Kabel sicherzustellen, ist bei dieser bekannten Vorrichtung im Umlenkbereich vom Schacht zum Kanalsystem eine das Kabel umgebende biegsame rohrförmige Umhüllung vorgesehen. Das aus der Umhüllung herausragende Kabelende ist über eine Klemme mit einer Spannvorrichtung verbunden, wobei die Spannkraft so gewählt wird, dass der zulässige Biegeradius nicht unterschritten wird. Damit das Kabel bzw. die dieses Kabel umgebende Umhüllung im Umlenkbereich nicht in den Kanal hineinragen, ist es erforderlich, die Übergangsstelle zwischen der Schachtwand und der Kanalwand abzuschrägen, was einen zusätzlichen beträchtlichen Arbeitsaufwand im vom Abwasser durchströmten Kanal erfordert und eine unerwünschte Beschädigung der Kanalwand mit der Gefahr verursacht, dass dort eine undichte Stelle entsteht. Außerdem beeinträchtigen diese Abtragungen an der Kanalwand die Statik.

Aus der DE 29802655 U1 ist eine Schutzvorrichtung für Lichtwellenleiterkabel bekannt geworden, bei welcher im Umlenkbereich zwischen der Wand eines senkrechten Inspektionsschachtes und der Kanalwand ein Umlenkelement vorgesehen ist, das eine das Kabel aufnehmende Nut aufweist. Bei dieser bekannten Konstruktion ist zwar ein Abschrägen der Ecke, welche die Schachtwand mit dem Kanal bildet, nicht vorgesehen, dafür ragt jedoch das Umlenkelement in Folge der erforderlichen Krümmung zwecks Einhaltung des zulässigen Biegeradius des Kabels weit in den Schacht hinein. Bei der Einmündung einer Hauskanalleitung in einen Hauptkanal ist eine derartige Konstruktion nicht möglich, da sich dort am Umlenkelement vom Schmutzwasser mitgeführtes Schwemmgut festsetzen würde, wodurch nicht nur die Gefahr einer Beschädigung des Kabels gegeben ist, sondern auch eine teilweise Verstopfung des Kanalquerschnittes erfolgen kann.

Werden Kabelleitungen zu Grundstücken, auf welchen sich Bauwerke befinden, die an das Kabelnetz angeschlossen werden sollen, über eine von einem Hauptkanal abzweigende Hauskanalleitung, die etwa senkrecht in den Hauptkanal mündet und die einen maximalen Durchmesser von lediglich 500 mm, häufig auch geringer, aufweist, geführt, so darf im Umlenkbereich, um eine Beschädigung der Glasfaserkabel zu vermeiden, ein bestimmter Krümmungsradius nicht unterschritten werden. Bisher war es daher, ebenso wie bei der Zufuhr von Kabeln über einen Schacht in einen Kanal, erforderlich, die Kanalwand im Umlenkbereich teilweise abzutragen oder eine Kabelschlaufe in die Hauskanalleitung hineinragen zu lassen, was die bereits erwähnten Nachteile mit sich bringt.

Die vorliegende Erfindung hat sich zur Aufgabe gestellt, diese Nachteile zu vermeiden und eine Kabelführung für ein Kabel, insbesondere Glasfaserkabel, in einem Umlenkbereich, nämlich in einem Bereich, wo eine Hauskanalleitung von einem Hauptkanal abzweigt, zu schaffen, die auf einfache Weise hergestellt und montiert werden kann und bei welcher vor allem die bestehende Kanalwand nicht bearbeitet werden muss und daher auch nicht beschädigt bzw. geschwächt wird. Diese Aufgabe wird durch die kennzeichnenden Merkmale des Anspruchs 1 gelöst. Die Erfindung schlägt, ausgehend von einer Kabelführung an einer Kanaleinmündung, mit einem das Kabel im Bereich dieser Kanaleinmündung aufnehmenden Umlenkrohr, vor, dass das Umlenkrohr starr ausgebildet ist, wobei die Längsachse desselben zumindest im im Umlenkbereich verlaufenden mittleren Abschnitt entlang der Mantelfläche eines Zylinders angeordnet ist, dessen Achse in Längsrichtung der Kanaleinmündung verläuft, und dass der in der Kanaleinmündung liegende Endbereich des Umlenkrohres mit einem an sich bekannten, das Kabel aufnehmenden, flexiblen Führungselement, wie einem biegsamen Schlauch, einem biegsamen Rohr od.dgl., verbunden ist.

Dadurch, dass das Kabel im Umlenkbereich vom starren Umlenkrohr aufgenommen ist, wird dem Kabel ein bestimmter Verlauf entsprechend der Gestalt dieses starren Umlenkrohres aufgezwungen, wobei dadurch, dass der mittlere Abschnitt dieses starren Umlenkrohres entlang der Zylindermantelfläche in der Gestalt einer räumlichen Kurve verläuft, sichergestellt ist, dass einerseits der erforderliche Krümmungsradius nicht unterschritten wird, anderseits ein Hineinragen des Kabels bzw. des das Kabel umgebenden Umlenkrohres und Führungselementes in den Hauptkanal sowie die Kanaleinmündung vermieden wird. Das starre Umlenkrohr wird vorzugsweise an einer Schablone entsprechend geformt, damit die erwähnten Bedingungen eingehalten werden. In der Kanaleinmündung ist das Kabel in üblicher Weise in einem von einem flexiblen Rohr, Schlauch od.dgl. gebildeten Führungselement geführt, welches mit dem Ende des starren Umlenkrohres verbunden werden muss. Zu diesem Zweck ist erfindungsgemäß das Ende des Führungselementes mit einer, vorzugsweise angeformten, Muffe versehen, die den Endbereich des starren Umlenkrohres aufnimmt.

Wichtig bei der erfindungsgemäßen Kabelführung ist weiters die Stelle, an welcher das Kabel an den Enden des starren Umlenkrohres aus diesem austritt, denn es sollte dies eine von der Sohle des Kanalsystems entfernt liegende Stelle sein, damit das Kabel für den Durchfluss des Schmutzwassers kein Hindernis bildet. Aus diesem Grunde ist es von Vorteil, wenn der im Wesentlichen entlang einer Zylindermantelfläche verlaufende mittlere Abschnitt des starren Umkehrrohres innerhalb einer an der Wand der Kanaleinmündung, nämlich der Hauskanalleitung, anliegenden Rohrstutzens an diesem befestigt ist. Eine optimale Position des Kabels ergibt sich dann, wenn das starre Umlenkrohr so im Rohrstutzen positioniert ist, dass der andere Endbereich desselben etwa senkrecht zur Längsachse des Rohrstutzens sowie vorzugsweise etwa tangential zum Umfang des Rohrstutzens verläuft, wogegen der in der Kanaleinmündung liegende Endbereich etwa parallel zur Längsachse des Rohrstutzens verläuft. Der Rohrstutzen mit dem darin befestigten starren Umlenkrohr kann in diesem Fall so in der Kanaleinmündung positioniert werden, dass die Endbereiche dieses Umlenkohres die erwähnte, optimale Lage einnehmen. Vorzugsweise ist hierbei der Rohrstutzen elastisch aufweitbar ausgebildet, sodass er nach dem Einführen in die Kanaleinmündung infolge der Elastizität an der Kanalwand angepresst wird und daher keine zusätzlichen Maßnahmen für die Fixierung des Rohrstutzens in der erforderlichen Lage notwendig sind. Vorzugsweise besteht der Rohrstutzen aus einem in Achsrichtung geschlitzten Metallblech, welches so zum Rohrstutzen gebogen wird, dass die erforderliche elastische Aufweitbarkeit gewährleistet ist.

Wie bereits erwähnt, wird das starre Umlenkrohr zweckmäßig auf einer Schablone in die gewünschte Form gebogen, die es dann beibehält. Das starre Umlenkrohr kann hierbei aus Kunststoff oder aus Metall gebildet sein. Vorzugsweise besteht das starre Umlenkrohr jedoch aus einem Metall-Kunststoff-Verbundrohr, was den Vorteil mit sich bringt, dass eine leichte Verformbarkeit gewährleistet ist, die gebildete Form jedoch in der Folge beibehalten wird.

Wie bereits erwähnt, ist der Mittelabschnitt des starren Umlenkrohres an der Innenwand des Rohrstutzens befestigt. Hierzu können an der Innenwand des Rohrstutzens Schellen, Kabelbinder od.dgl. vorgesehen sein.

Bei der erfindungsgemäßen Kabelführung ist es weiters erforderlich, dass sich das in der Kanaleinmündung, nämlich der Hauskanalleitung befindliche, das Kabel aufnehmende Führungselement im Bereich des Scheitels der Hauskanalleitung befindet, und somit den Durchfluss des Abwassers nicht behindert. Es muss daher dafür Sorge getragen werden, dass dieses Führungselement an der erwähnten Stelle in der in der Regel einen maximalen Durchmesser von 500 mm aufweisenden Hauskanalleitung fixiert ist. Hierzu ist im Anschluss an den Rohrstutzen ein an der Wand der Kanaleinmündung anliegender, das Führungselement an dieser Wand fixierender Auskleidungsschlauch vorgesehen. Dieser Auskleidungsschlauch kann mit einem, vorzugsweise durch Wärmezufuhr aushärtbaren Kunstharz getränkt sein. In diesem Fall wird, nachdem der Auskleidungsschlauch an die Wand der Kanaleinmündung angepresst worden ist, durch Aushärten des Kunstharzes der Schlauch verfestigt und stützt dadurch das Führungselement an der Kanalwand ab.

Das erfindungsgemäße Verfahren zum Herstellen einer Kabelführung für ein, in einem Kanalsystem, vorzugsweise einem Abwasserkanalsystem, geführtes Kabel, insbesondere Glasfaserkabel, im Umlenkbereich an einer Kanaleinmündung besteht darin, dass zunächst vom Umlenkbereich ausgehend ein flexibles Führungselement, wie ein biegsames Rohr oder ein Schlauch, in die Kanaleinmündung eingeführt wird, dass mit dem Ende dieses Führungselementes ein starres Umlenkrohr verbunden wird, das so verformt wurde, dass seine Längsachse im Mittelabschnitt im Wesentlichen entlang einer gedachten Zylindermantelfläche verläuft, dass hierauf dieses starre Umlenkrohr an der Innenseite eines elastisch aufweitbaren Rohrstutzens fixiert wird, worauf der Rohrstutzen mit dem daran fixierten, starren Umlenkrohr in die Kanaleinmündung vom Umlenkbereich ausgehend derart eingeschoben wird, dass der Rohrstutzen unter Spannung an der Wand der Kanaleinmündung anliegt, und das starre Umlenkrohr etwa tangential im Bereich der oberen Begrenzung des Rohrstutzens aus diesem in das Kanalsystem austritt, worauf das Kabel in das Umlenkrohr und das damit verbundene Führungselement eingezogen wird. Dadurch wird auf einfache Weise eine Kabelführung hergestellt, bei welcher das Kabel im Umlenkbereich die erforderliche Lage einnimmt und insbesondere nicht unzulässig gebogen wird.

In einem weiteren Verfahrensschritt wird durch den Rohrstutzen ein Auskleidungsschlauch in die Kanaleinmündung eingeführt, wobei durch Zufuhr eines Druckmittels, vorzugsweise von unter Druck stehendem Wasser, in das Schlauchinnere der Schlauch an die Wand der Kanaleinmündung sowie an das entlang dieser Wand verlaufende Führungselement angepresst und in dieser angepressten Lage fixiert wird. Dadurch wird die Lage des Führungselementes im Kanalsystem in der gewünschten Weise festgelegt.

Die Fixation des mit einem aushärtbaren Kunstharzes getränkten Auskleidungsschlauches erfolgt hierbei zweckmäßig durch Zufuhr eines erhitzten Mediums, insbesondere von erhitztem Wasser, in das Schlauchinnere, wodurch der Aushärtvorgang bewirkt wird und sich der Schlauch verfestigt

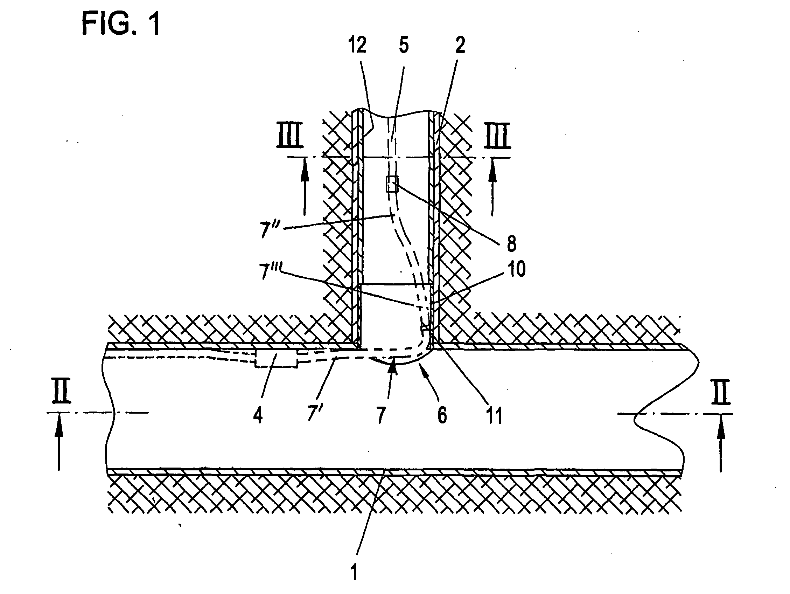

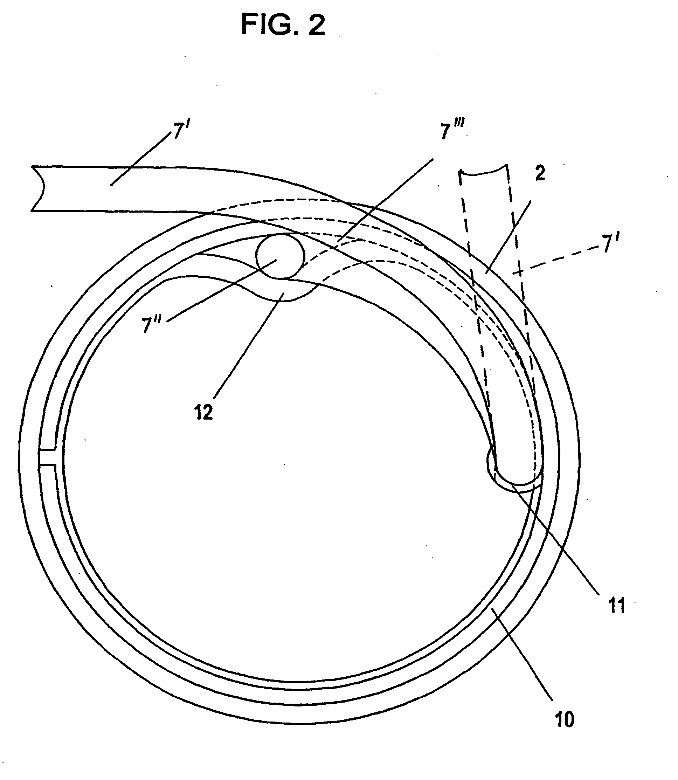

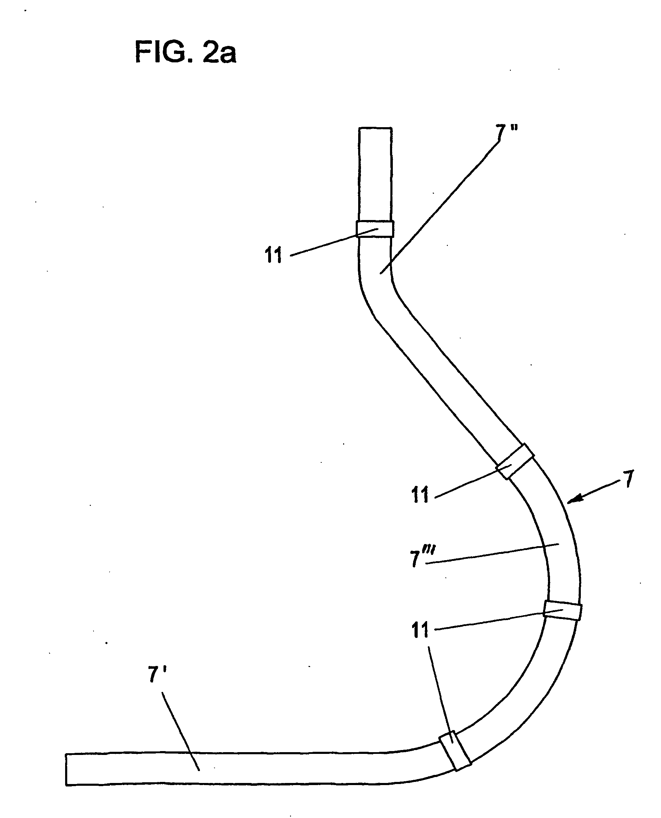

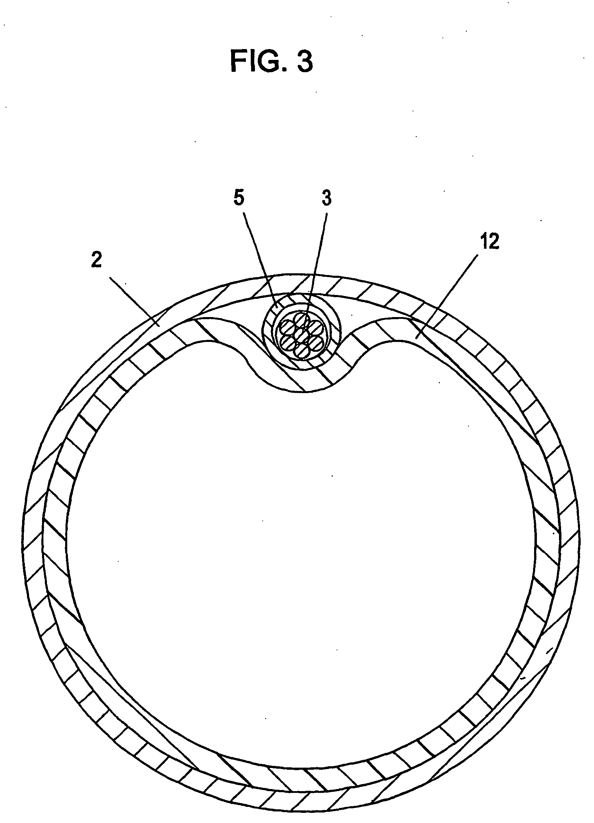

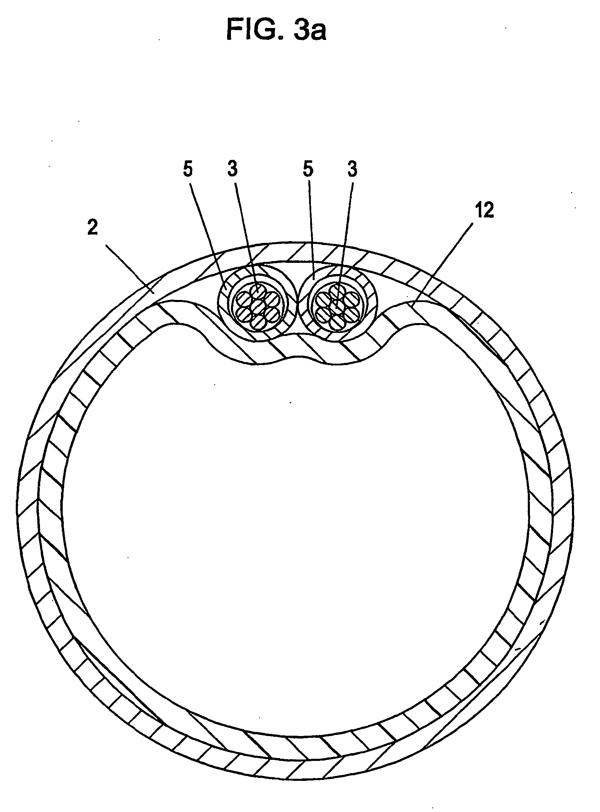

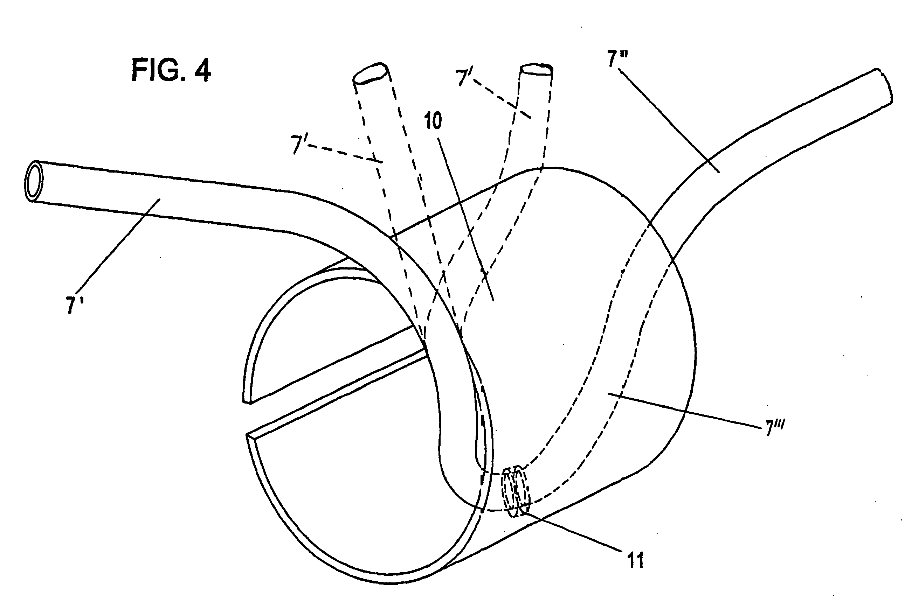

In der Zeichnung ist die erfindungsgemäße Kabelführung schematisch dargestellt. Fig. 1 zeigt einen Horizontalschnitt durch ein Kanalsystem. Fig. 2 stellt einen Schnitt nach der Linie II - II in Fig. 1. Fig. 2a zeigt ein das Glasfaserkabel aufnehmendes Umlenkrohr auf einem abgerollten Zylindermantel. Fig. 3 zeigt einen Schnitt nach der Linie III - III in Fig. 1. Fig. 3a zeigt eine abgewandelte Ausführungsform entsprechend der Darstellung in Fig. 3. Fig. 4 zeigt in perspektivischer Darstellung den wesentlichen Bestandteil der erfindungsgemäßen Kabelführung.

Das in Fig. 1 dargestellte Abwasserkanalsystem weist einen Hauptkanal 1 auf, von dem eine Hauskanalleitung 2 abzweigt. Etwa in einem Kämpfer des einen eiförmigen Querschnitt aufweisenden Hauptkanales 1 befindet sich eine nicht dargestellte Abstützung für das in diesem Hauptkanal geführte Glaserfaserkabel. Von diesem soll als Abzweigung ein Glasfaserkabel 3 über die Hauskanalleitung 2 zu einem auf einem Grundstück befindlichen Gebäude geführt werden. Die Abzweigung erfolgt über einen an der Wand des Hauptkanales 1 befestigten Verteilkasten 4.

Wie aus Fig. 3 ersichtlich, ist das Glasfaserkabel 3 in einem aus einem Rohr, Schlauch od.dgl. bestehenden Führungselement 5 geführt, das in der im folgenden noch näher beschriebenen Weise im Scheitelpunkt der Hauskanalleitung angeordnet ist, damit die das Abwasser führende Sohle dieser Hauskanalleitung 2 frei gehalten ist.

Im Umlenkbereich 6, also in jenem Bereich, wo das Glasfaserkabel 3 vom Hauptkanal 1 kommend, in die Hauskanalleitung 2 einmündet, ist ein starres Umlenkrohr 7 für das Glasfaserkabel 3 vorgesehen, des an seinem einen Ende über eine am Führungselement 5 angeformte Muffe 8 mit diesem Führungselement 5 flüssigkeitsdicht verbunden ist und mit seinem anderen Ende in den Verteilkasten 4 mündet. Der Mittelabschnitt 7"' des starren Umlenkrohres 7 verläuft im wesentlichen entlang der Mantelfläche eines Zylinders, ist also so geformt, dass das von diesem Umlenkrohr 7 aufgenommene Glasfaserkabel keinen unzulässigen Knickbeanspruchungen ausgesetzt ist und die gewünschte Lage im Hinblick auf das Kanalsystem einnimmt. Um diese Lage sicherzustellen, ist das starre Umlenkrohr 7 an der Innenseite eines Rohrstutzens 10 über Kabelbinder 11 oder sonstige Befestigungseinrichtungen fixiert. Der Rohrstutzen 10 ist elastisch aufweitbar ausgebildet und besteht aus einem in Achsrichtung geschlitzten Metallblech (siehe Fig. 4), das so gebogen ist, dass es nach dem Einsetzen in die Hauskanalleitung 2 unter Spannung an der Kanalwand anliegt und dadurch in seiner Lage fixiert ist. Der Rohrstutzen 10 wird so in die Hauskanalleitung 2 eingeführt, dass, wie aus den Fig. 2 und 4 hervorgeht, der eine Endbereich 7' des starren Umlenkrohres 7, welches mit dem Verteilkasten 4 verbunden ist, etwa senkrecht zur Längsachse des Rohrstutzens 10 und im wesentlichen tangential zum Umfang des Rohrstutzens 10 verläuft, wogegen der andere, mit dem Führungselement 5 verbundene Endbereich 7" etwa parallel zur Längsachse des Rohrstutzens 10 im Scheitelbereich desselben aus diesem austritt.

Die Fixierung des Führungselementes 5 im Scheitel der Hauskanalleitung 2 erfolgt in der Weise, dass zunächst über Hilfsmittel dieses Führungselement in die gewünschte Lage gebracht wird, worauf über den Rohrstutzen 10 ein mit einem aushärtbaren Kunstharz getränkter Auskleidungsschlauch 12 (siehe Fig. 3) in die Hauskanalleitung 2 eingebracht wird. Das Einbringen erfolgt derart, dass das eine Ende des Auskleidungsschlauches dicht verschlossen wird und dass dann ein Druckmittel, vorzugsweise Wasser, in den Schlauch eingefüllt wird, sodass sich der Schlauch umstülpt und an die Wand der Hauskanalleitung und an das Führungselement 5 angepresst wird, wobei er die in Fig. 3 dargestellte Lage einnimmt. Anschließend wird der Auskleidungsschlauch durch Zufuhr von erhitztem Wasser erwärmt, wodurch das Kunstharz aushärtet und sich der Auskleidungsschlauch 12 verfestigt. Wie aus Fig. 3 hervorgeht, wird bei dieser Ausbildung der Querschnitt der Hauskanalleitung 2 lediglich unwesentlich verringert und somit die Abfuhr des Abwassers nicht behindert.

Das Einziehen des Glasfaserkabels 3 in das starre Umlenkrohr 7 und das daran anschließende Führungselement 5 erfolgt erst nach Montage und Fixierung dieser Teile.

In Fig. 3a ist eine Ausführung gezeigt, bei welcher zwei parallel verlaufende Führungselemente 5 mit darin befindlichen Glasfaserkabeln 3 vorgesehen sind. Eine solche Ausbildung weist gegenüber der Anordnung von zwei Glaserfaserkabeln in einem einzigen Führungselement 5 größeren Querschnittes den Vorteil auf, dass dadurch der Querschnitt der Hauskanalleitung 2 strömungstechnisch in geringerem Maße beeinträchtigt ist.

Unter einem starren Umlenkrohr 7 ist auch ein schwer biegbarer Formteil, z.B. ein Rohrstück aus schwer biegbarem Kunststoff zu verstehen.

Im Innenbereich des Rohrstutzens 10 liegt das Umlenkrohr 7 an der Innenfläche des Rohrstutzens 10 an.

Der Endbereich 7' des Umlenkrohres 7 kann - wie in Fig. 2 und 4 dargestellt - zwischen drei bevorzugten Lagen auch alle Zwischenpositionen einnehmen.

Die Lage bzw. Ausrichtung des Endbereiches 7' bzw. des Rohrstutzens 10 in der Hauskanalleitung 2 wird beim Einsetzen des Rohrstutzens 10 an den Verlauf der bereits im Hauptkanal 1 verlegten oder zu verlegenden Kabel angepasst. Vorteilhaft verläuft der Endbereich 7' horizontal und mündet im obersten Bereich der Hauskanalleitung 2 in den Rohrstutzen 10; eine Einmündung des Endbereiches 7' in die Hauskanalleitung 2 kann auch im oberen Bereich der Seitenwand einer Hauskanalleitung erfolgen.

Der Endbereich 7' ist im Bereich seiner Einmündung in die Hauskanalleitung 2 bzw. in den Rohrstutzen 10 in einer Ebene senkrecht zur Längsachse des Rohrstutzens 10 und/oder in einer Ebene, die parallel zur Achse des Hauptkanals 1 verläuft und eine Erzeugende des Rohrstutzens 10 enthält, gekrümmt.

Innerhalb des Rohrstutzens 10 verläuft das Führungselement 5 im Umlenkrohr im wesentlichen im Scheitel des Rohrstutzens 10 bzw. der Hauskanalleitung 2. In dieser Hauskanalleitung erfolgt auch der Anschluss an den Endbereich 7".

## Patentansprüche

1. Kabelführung für ein in einem Kanalsystem, vorzugsweise einem Abwasserkanalsystem geführtes Kabel insbesondere Glasfaserkabel (3), mit einem das Kabel (3) im Bereich (6) einer Kanaleinmündung (2) aufnehmenden Umlenkrohr (7), **dadurch gekennzeichnet, dass** das Umlenkrohr (7) starr ausgebildet ist, wobei die Längsachse desselben zumindest im mittleren Abschnitt (7"') entlang der Mantelfläche eines Zylinders angeordnet ist, dessen Achse in Längsrichtung der Kanaleinmündung (2) verläuft, und dass in der Kanaleinmündung (2) ein das Kabel (3) aufnehmendes, mit einem Endbereich (7") des Umlenkrohres verbundenes flexibles Führungselement (5) wie ein biegsamer Schlauch oder ein biegsames Rohr, vorgesehen ist.

2. Kabelführung nach Anspruch 1, **dadurch gekennzeichnet, dass** der Endbereich (7") des starren Führungsrohres (7) über eine, vorzugsweise am Führungselement (5) angeformte Muffe (8), mit diesem Führungselement verbunden ist.

3. Kabelführung nach Anspruch 1, **dadurch gekennzeichnet, dass** der im Wesentlichen entlang einer Zylinderfläche verlaufende Abschnitt (7''') des Umlenkrohres (7) innerhalb eines an einer Wand der Kanaleinmündung (2) anliegenden Rohrstutzens (10) an diesem befestigt ist.

4. Kabelführung nach Anspruch 3, **dadurch gekennzeichnet, dass** der eine Endbereich (7') des starren Umlenkrohres (7) etwa senkrecht zur Längsachse des Rohrstutzens (10) sowie vorzugsweise etwa tangential zum Umfang des Rohrstutzens (10) verläuft.

5. Kabelführung nach Anspruch 3 und 4, **dadurch gekennzeichnet, dass** der andere Endbereich des starren Umlenkrohres (7) etwa parallel zur Längsache des Rohrstutzens (10) verläuft.

6. Kabelführung nach Anspruch 3, **dadurch gekennzeichnet, dass** der Rohrstutzen (10) elastisch aufweitbar ausgebildet ist.

7. Kabelführung nach Anspruch 3 und 4, **dadurch gekennzeichnet, dass** der Rohrstutzen (10) aus einem in Achsrichtung geschlitzten Metallblech besteht

8. Kabelführung nach Anspruch 1, **dadurch gekennzeichnet, dass** das starre Umlenkrohr (7) aus einem Metall-Kunststoff-Verbundrohr besteht.

9. Kabelführung nach einem der Ansprüche 1 bis 8, **dadurch gekennzeichnet, dass** an der Innenwand des Rohrstutzens (10) Schellen, Kabelbinder (11) od.dgl. für die Befestigung des starren Umlenkrohres (7) vorgesehen sind.

10. Kabelführung nach einem der Ansprüche 1 bis 9, **dadurch gekennzeichnet, dass** im Anschluss an den Rohrstutzen (10) ein an der Wand der Kanaleinmündung (2) anliegender, das Führungselement (5) an dieser Wand fixierender Auskleidungsschlauch (12) vorgesehen ist.

11. Kabelführung nach Anspruch 10, **dadurch gekennzeichnet, dass** der Auskleidungsschlauch (12) mit einem, vorzugsweise durch Wärmezufuhr, aushärtbaren Kunststoffharz getränkt ist.

12. Verfahren zur Herstellung einer Kabelführung für ein, in einem Kanalsystem, vorzugsweise einem Abwasserkanalsystem (1) geführtes Kabel, insbesondere Glasfaserkabel (3), im Umlenkbereich (6) an einer Kanaleinmündung (2), **dadurch gekennzeichnet, dass** zunächst vom Umlenkbereich (6) ausgehend ein flexibles Führungselement (5), wie ein biegsames Rohr oder ein Schlauch, in die Kanaleinmündung (2) eingeführt wird, dass mit dem Ende dieses Führungselementes (5) ein starres Umlenkrohr (7) verbunden wird, das so verformt wurde, dass seine Längsachse im Mittelabschnitt (7") im wesentlichen entlang einer gedachten Zylinderfläche verläuft, dass hierauf dieses starre Umlenkrohr (7) an der Innenseite eines elastisch aufweitbaren Rohrstutzens (10) fixiert wird, worauf der Rohrstutzen (10) mit dem daran fixierten, starren Umlenkrohr (7) in die Kanaleinmündung (2) vom Umlenkbereich (6) ausgehend derart eingeschoben wird, dass der Rohrstutzen (10) unter Spannung an der Wand der Kanaleinmündung (2) anliegt, und das starre Umlenkrohr (7) etwa tangential im Bereich der oberen Begrenzung des Rohrstutzens (10) aus diesem in das Kanalsystem (1) austritt, worauf das Kabel (3) in das Umlenkrohr (7) und das damit verbundene Führungselement (5) eingezogen wird.

13. Verfahren nach Anspruch 12, **dadurch gekennzeichnet, dass** in einem weiteren Verfahrensschritt durch den Rohrstutzen (10) ein Auskleidungsschlauch (12) in die Kanaleinmündung (2) eingeführt wird, wobei durch Zufuhr eines Druckmittels, vorzugsweise von unter Druck stehendem Wasser, in das Schlauchinnere der Auskleidungsschlauch (12) an die Wand der Kanaleinmündung (2) sowie an das entlang dieser Wand verlaufende Führungselement (5) angepresst und in der angepressten Lage fixiert wird.

14. Verfahren nach Anspruch 13, **dadurch gekennzeichnet, dass** die Fixation des mit einem aushärtbaren Kunstharz getränkten Auskleidungsschlauches (12) durch Zufuhr eines erhitzten Mediums, insbesondere von erhitztem Wasser, in das Schlauchinnere erfolgt.

## Claims

1. Cable guide for a cable, particularly a glass fibre cable, run in a channel system, preferably a sewer system, comprising a deviating tube (7) that receives said cable (3) in the region (6) of a channel mouth (2), **characterised in that** said deviating tube (7) is rigid, the longitudinal axis thereof, at least in a middle section (7"'), being situated along a peripheral surface of a cylinder, the axis of which extends in longitudinal direction of said channel mouth (2), and that a flexible guiding element (5), such as a flexible hose or a flexible tube, is provided in said channel mouth (2) which receives said cable (3) and is connected to an end region (7") of said deviating tube.

2. Cable guide according to claim 1, **characterised in that** the end region (7") of the rigid guiding tube (7) is connected to this guiding element (5) by a sleeve (8), preferably formed on said guiding element (5).

3. Cable guide according to claim 1, **characterised in that** that section (7"') of the deviating tube (7), which extends substantially along a cylindrical surface, is mounted within and to a pipe socket (10) which engages the wall of said channel mouth (2).

4. Cable guide according to claim 3, **characterised in that** one of the end regions (7') of the rigid deviating tube (7) extends about perpendicularly to the longitudinal axis of said pipe socket (10), and preferably about tangentially to the periphery of said pipe socket (10).

5. Cable guide according to claims 3 and 4, **characterised in that** the other end region of the rigid deviating tube (7) extends about parallel to the longitudinal axis of said pipe socket (10).

6. Cable guide according to claim 3, **characterised in that** the pipe socket (10) is elastically expandable.

7. Cable guide according to claims 3 and 4, **characterised in that** the pipe socket (10) consists of sheet metal slotted in axial direction.

8. Cable guide according to claim 1, **characterised in that** the rigid deviating tube (7) consists of a composite tube of metal and plastic material.

9. Cable guide according to any of claims 1 to 8, **characterised in that** clips, cable binders (11) or the like for mounting said rigid deviating tube (7) are provided on the inner wall of said pipe socket (10).

10. Cable guide according to any of claims 1 to 9, **characterised in that** following said pipe socket (10) a lining hose (12) is provided which engages the wall of said channel mouth (2) and fixes said guiding element (5) to this wall.

11. Cable guide according to claim 10, **characterised in that** said lining hose (12) is impregnated with a plastic resin which is curable, preferably by addition of heat.

12. Method for producing a cable guide for a cable, particularly a glass fibre cable, run in a channel system, preferably a sewer system, in the deviating region (6) of a channel mouth (2), **characterised in that** a flexible guiding element (5), such as a flexible tube or a hose, is first introduced into the channel mouth (2), starting from the deviating region (6), that to the end of said guiding element (5) a rigid deviating tube (7) is connected, which has been deformed in such a manner that in its middle section (7") its longitudinal axis extends substantially along an imaginary cylindrical surface, that afterwards this rigid deviating tube (7) is fixed to the interior of an elastically expandable pipe socket (10), after which the pipe socket (10), together with the rigid deviating tube (7) fixed to it, starting from the deviating region (6), is pushed into said channel mouth (2) in such a manner that said pipe socket (10) engages under tension the wall of said channel mouth (2) and the rigid deviating tube (7) emerges therefrom about tangentially in the region of the upper delimitation of said pipe socket (10) into the channel system (1), after which the cable (3) is drawn into said deviating tube (7) and the guiding element (5) connected to it.

13. Method according to claim 12, **characterised in that** in a further step, a lining hose (12) is introduced through said pipe socket (10) into the channel mouth (2), said lining hose (12) being pressed against the wall of the channel mouth (2) as well as to the guiding element (5), which extends along this wall, by supplying a pressure medium, preferably pressurised water, into the interior of the hose, and is fixed in the position pressed on.

14. Method according to claim 13, **characterised in that** fixing of said lining hose (12), that is impregnated with a curable artificial resin, is effected by supplying a heated medium, particularly heated water, into the interior of the hose.

## Revendications

1. Guide-câble pour un câble, particulièrement un câble à fil de verre (3), guidé dans un système de canal, de préférence dans un système de canal des eaux de trop-plein, comprenant un tube de déviation (7) recevant le câble (3) dans la zone (6) d'une embouchure de canal (2), **caractérisé en ce que** le tube de déviation (7) est formé d'une manière rigide, l'axe longitudinal duquel, au moins dans la section médiane (7"'), étant disposé le long d'une surface latérale d'un cylindre, dont l'axe s'étend en direction longitudinale de l'embouchure de canal (2), et qu'un élément de guidage (5) flexible, comme un tuyau flexible ou un tube flexible, est prévu dans l'embouchure de canal (2), qui reçoit le câble (3) et est relié à une zone finale (7") du tube de déviation.

2. Guide-câble selon la revendication 1, **caractérisé en ce que** la zone finale (7") du tube rigide de guidage (7) est relié par un manchon (8), préférablement formé à l'élément de guidage (5), à cet élément de guidage.

3. Guide-câble selon la revendication 1, **caractérisé en ce que** la section (7"') du tube de déviation (7), qui s'étend essentiellement le long d'une surface de cylindre, est fixée à l'intérieur d'une tubulure (10) à celle-ci, qui colle à une paroi de l'embouchure de canal (2).

4. Guide-câble selon la revendication 3, **caractérisé en ce qu'**une des zones finales (7') du tube rigide de déviation (7) s'étend à peu près perpendiculairement à l'axe longitudinal de la tubulure (10) et, de préférence, à peu près tangentiellement à la circonférence de la tubulure (10).

5. Guide-câble selon les revendications 3 et 4, **caractérisé en ce que** l'autre zone finale du tube rigide de déviation (7) s'étend à peu près parallèlement à l'axe longitudinal de la tubulure (10).

6. Guide-câble selon la revendication 3, **caractérisé en ce que** la tubulure (10) est formée d'une manière, qu'elle peut être élastiquement évasée.

7. Guide-câble selon les revendications 3 et 4, **caractérisé en ce que** la tubulure (10) consiste d'une tôle métallique fendue en direction axiale.

8. Guide-câble selon la revendication 1, **caractérisé en ce que** le tube rigide de déviation (7) consiste d'un tube composite de métal et de matière plastique.

9. Guide-câble selon une quelconque des revendications 1 à 8, **caractérisé en ce que** des brides, des ligatures de câble (11) ou pareil pour le montage du tube rigide de déviation (7) sont prévues à la paroi intérieure de la tubulure (10).

10. Guide-câble selon une quelconque des revendications 1 à 9, **caractérisé en ce qu'**un tuyau de revêtement (12) est prévu se joignant à la tubulure (10), qui colle à une paroi de l'embouchure (2), et fixe l'élément de guidage (5) à cette paroi.

11. Guide-câble selon la revendication 10, **caractérisé en ce que** le tuyau de revêtement (12) est imprégné avec une résine de matière synthétique durcissable, de préférence par adduction de chaleur.

12. Procédé pour produire un guide-câble pour un câble, particulièrement un câble à fil de verre (3), guidé dans un système de canal, de préférence dans un système de canal des eaux de trop-plein (1), dans la zone de déviation (6) à une embouchure de canal (2), **caractérisé en ce qu'**à partir de la zone de déviation (6) d'abord un élément de guidage flexible (5), comme un tuyau flexible ou un tube flexible, est introduit dans l'embouchure de canal (2), qu'un tube rigide de déviation (7) est relié au bout de cet élément de guidage (5), qui est déformé de manière, que son axe longitudinal, dans la zone médiane (7"), s'étend essentiellement le long d'une surface cylindrique imaginaire, qu'après cela ce tube rigide de déviation (7) est fixé à l'intérieur d'une tubulure (10) à être élastiquement évasée, après quoi la tubulure (10) avec le tube rigide de déviation (7) fixé à celle-ci est introduite dans l'embouchure de canal (2) à partir de la zone de déviation (6) d'une manière, que la tubulure (10) colle sous tension à la paroi de l'embouchure de canal (2), et le tube rigide de déviation (7) émerge à peu près tangentiellement dans la zone de la limitation supérieure de la tubulure (10) de celle-ci et dans le système de canal (1), après quoi le câble (3) est inséré en le tirant dans le tube de déviation (7) et dans l'élément de guidage (5) relié à celui-ci.

13. Procédé selon la revendication 12, **caractérisé en ce qu'**un tuyau de revêtement (12), dans une étape ultérieure du procédé, est introduit dans l'embouchure de canal (2) à travers la tubulure (10), le tuyau de revêtement (12) étant pressé contre la paroi de l'embouchure de canal (2) ainsi que contre l'élément de guidage (5), qui s'étend le long de cette paroi, par l'adduction d'un milieu de pression, préférablement de l'eau sous pression, dans l'intérieur du tuyau, et est fixé dans la position pressée.

14. Procédé selon la revendication 13, **caractérisé en ce que** la fixation du tuyau de revêtement (12) imprégné d'une résine de matière synthétique durcissable est effectuée par l'adduction d'un milieu chauffé, particulièrement de l'eau chauffé, à l'intérieur du tuyau.
